# EUROPEAN PATENT APPLICATION

(11) **EP 4 528 606 A2**
(43) Date of publication of application: **26.03.2025**
(21) Application number: 24201688.9
(22) Date of filing: 20.09.2024
(51) Int. Cl.: G06N 20/00, G06Q 50/02

(54) **SYSTEMS AND METHODS FOR VISUALIZING AND INTERACTING WITH AGRICULTURAL SYSTEMS**

(30) Priority: 21.09.2023 US 202363584469 P; 19.09.2024 US 202418890597
(71) Applicant: AgTechLogic Inc., Phoenix, AZ 85016 (US)
(72) Inventor: HOFFMAN, Justin, Phoenix, 85016 (US); GAUTHIER, Tom, Phoenix, 85016 (US)
(74) Representative: Barker Brettell LLP

(57) **Abstract**

Implementations of a system for processing agricultural data may include a farmer headset operatively coupled via a first telecommunication channel to a game engine; one or more processors and a memory included in a cloud computing system operatively coupled with the game engine; and a reinforcement learning module operatively coupled with the one or more processors and the memory and with the farmer headset via the first telecommunication channel. The reinforcement learning module may be configured to receive instructions using the first telecommunication channel from the farmer headset from a farmer wearing the farmer headset. The reinforcement learning module may be configured to, using the one or more processors and the memory and a second telecommunication channel, receive data from one or more sensors coupled to one of crewed equipment or uncrewed equipment traversing a farm associated with the farmer.

## Description

### CROSS REFERENCE TO RELATED APPLICATIONS

This document claims the benefit of the filing date of U.S. Provisional Patent Application 63/584,469, entitled "Systems and Methods for Visualizing and Interacting with Agricultural Data" to Hoffman et al. which was filed on 9/21/2023, the disclosure of which is hereby incorporated entirely herein by reference.

### BACKGROUND

### 1. Technical Field

Aspects of this document relate generally to systems for collecting, processing modeling, and enabling farmers to take action on agricultural data.

### 2. Background

Farmers utilize land to grow various crops and raise various animals. Soil can be used as the growing medium for the crops or nutrient solutions can be used to hydroponically grow the crops. The crops can be used to feed animals whose products are then sold or prepared for direct human consumption or for additional processing prior to human or animal consumption.

### SUMMARY

Implementations of a system for processing agricultural data may include a farmer headset operatively coupled via a first telecommunication channel to a game engine; one or more processors and a memory included in a cloud computing system operatively coupled with the game engine; and a reinforcement learning module operatively coupled with the one or more processors and the memory and with the farmer headset via the first telecommunication channel. The reinforcement learning module may be configured to receive instructions using the first telecommunication channel from the farmer headset from a farmer wearing the farmer headset. The reinforcement learning module may be configured to, using the one or more processors and the memory and a second telecommunication channel, receive data from one or more sensors coupled to one of crewed equipment or uncrewed equipment traversing a farm associated with the farmer.

Implementations of a system for processing agricultural data may include one, all, or any of the following:

The farmer headset may be one of a virtual reality headset or an augmented reality headset.

The one or more sensors may be one of visual sensors, cameras, ultraviolet sensors, infrared sensors, temperature sensors, humidity sensors, pressure sensors, vibration sensors, ambient light sensors, or any combination thereof.

The crewed equipment may be tractors, harvesters, spraying systems, or manual watering systems.

The uncrewed equipment may be autonomous equipment or semiautonomous equipment.

The uncrewed equipment may include uncrewed aerial vehicles, uncrewed ground vehicles, uncrewed water vehicles, autonomously driven tractors, autonomous harvesters, autonomous weeding systems, autonomous fertilizing systems, or autonomous watering systems.

The reinforcement learning module may include a machine learning module operatively coupled with the one or more processors and the memory; a data ingestion/recategorization module operatively coupled with the game engine, the farmer headset and with the one or more processors and the memory; a model training module coupled with the machine learning module and with the data ingestion/recategorization module; and a model retraining module coupled with the machine learning module and with the data ingestion/recategorization module.

The data ingestion/recategorization module may be configured to receive processed sensor data from the cloud computing system and to format the processed sensor data for use in machine learning.

The model training module may receive processed sensor data from the data ingestion/recategorization module and train a model included in the machine learning module.

The model retraining module may receive processed sensor data from the data ingestion/recategorization module and retrain the model included in the machine learning module.

The model included in the machine learning module may be a deep reinforcement learning model and outputs from the model may be transmitted to the one or more processors of the cloud computing system for transmission to the game engine.

The game engine may be configured to receive instructions from the farmer headset and enable the farmer to virtually walk a portion of the farm associated with the farmer that was traversed by the one of the crewed equipment or the uncrewed equipment.

Implementations of a method for enabling a farmer to virtually walk a farm may include, using a farmer headset, receiving an instruction from a farmer wearing the farmer headset and, using the farmer headset, transmitting the instruction via a first telecommunication channel to a game engine. The method may also include; using one or more processors and a memory included in a cloud computing system operatively coupled with the game engine, identifying a physical location on a farm associated with the farmer from the instruction; with the physical location, retrieving synthesized sensor data associated with the physical location from a cloud database included in the cloud computing system and sending the synthesized sensor data to the game engine; and rendering a three dimensional view of the physical location from a perspective of the farmer headset included in the instruction using the game engine and the synthesized sensor data. The method may also include transmitting the three dimensional view of the physical location to the farmer headset via the first telecommunication channel and displaying the three dimensional view to the farmer using the farmer headset.

Implementations of a method for enabling a farmer to virtually walk a farm may include one, all, or any of the following:

Receiving an instruction from the farmer further may include receiving a selection of the physical location from an interface displayed by the farmer headset.

The three dimensional view may include a transition from an existing three dimensional view to the three dimensional view of the physical location.

The three dimensional view may include a crop section that includes information associated with the crop section, the information including one of crop type, plant type, number of weeds, operations errors, last watering time, Ph balance, soil moisture content, or any combination thereof.

Implementations of a method for enabling a farmer to schedule a desired action may include, using a farmer headset, receiving an instruction from a farmer wearing the farmer headset and, using the farmer headset, transmitting the instruction via a first telecommunication channel to a game engine. The method may include, using one or more processors and a memory included in a cloud computing system operatively coupled with the game engine, identifying a physical location on a farm associated with the farmer from the instruction; using one or more processors and the memory included in the cloud computing system operatively coupled with the game engine, identifying one or more pieces of equipment for performing a desired action included in the instruction at the physical location; and using the one or more processors and the memory included in the cloud computing system, scheduling the desired action at one or more times using a queuing module. The method may include, using the queuing module, issuing an instruction to perform the desired action; using the queuing module, receiving a confirmation that the desired action may have been completed; transmitting the confirmation to the game engine; and updating data associated with the physical location to reflect the completion of the desired action.

Implementations of a method for enabling a farmer to schedule a desired action may include one, all, or any of the following:

Issuing the instruction to perform the desired action further may include issuing the instruction to one or more pieces of uncrewed equipment and where receiving the confirmation further may include receiving the confirmation from the one or more pieces of uncrewed equipment that the desired action may have been completed.

Isuing the instruction to perform the desired action further may include issuing the instruction to one or more workers and wherein receiving the confirmation further may include receiving the confirmation from the one or more workers that the desired action may have been completed.

The desired action may be one of watering, spraying, photographing, weeding, fertilizing, plowing, raking, cultivating, cutting, harvesting, or any combination thereof.

Implementations of a method of enabling a farmer to monetize agricultural data may include providing a blockchain and, using one or more processors and a memory, receiving image data from one or more sensors coupled to crewed equipment or uncrewed equipment traversing a farm associated with a farmer. The method also may include creating one or more non-fungible tokens associated with the image data and metadata using the blockchain and the one or more processors and the memory. The method also may include sharing the one or more non-fungible tokens with a neighboring farmer, a commercial entity, or an interested party for a fee using a telecommunication channel.

Implementations of a method of enabling a farmer to monetize agricultural data may include one, all, or any of the following:

The method may also include where the non-fungible tokens include image data, a data sample, video, global positioning system coordinates, and metadata.

The method may also include using the one or more non-fungible tokens to validate printed reports or data summaries of metadata associated with the farm.

The method may also include using the one or more non-fungible tokens and the blockchain to create a smart contact between the farmer and an agricultural expert.

The foregoing and other aspects, features, and advantages will be apparent to those artisans of ordinary skill in the art from the DESCRIPTION and DRAWINGS, and from the CLAIMS.

### BRIEF DESCRIPTION OF THE DRAWINGS

Implementations will hereinafter be described in conjunction with the appended drawings, where like designations denote like elements, and:
FIG. 1 is a block diagram of physical components of an implementation of a system for processing and using agricultural data;
FIG. 2 is a block diagram of the control components of an implementation of a system for processing and using agricultural data;
FIG. 3 is a block diagram of the control components of an implementation of a system for enabling a farmer to schedule an action;
FIG. 4 is a flowchart of an implementation of a method of enabling a farmer to virtually walk a farm; and
FIG. 5 is a flowchart of an implementation of a method of enabling a farmer to schedule a desired action.

### DESCRIPTION

This disclosure, its aspects and implementations, are not limited to the specific components, assembly procedures or method elements disclosed herein. Many additional components, assembly procedures and/or method elements known in the art consistent with the intended systems and methods for visualizing and interacting with agricultural data will become apparent for use with particular implementations from this disclosure. Accordingly, for example, although particular implementations are disclosed, such implementations and implementing components may comprise any shape, size, style, type, model, version, measurement, concentration, material, quantity, method element, step, and/or the like as is known in the art for such systems and methods for visualizing and interacting with agricultural data, and implementing components and methods, consistent with the intended operation and methods.

The various implementations of systems and methods for visualizing, interacting with, and using agricultural data to schedule desired actions involve data derived from and consumed in agricultural operations, such as, by non-limiting example, farms, aquaculture facilities, hydroponic facilities, greenhouse facilities, and the like.

Farmers utilize uncrewed aerial vehicles (UAVs) to conduct aerial surveillance that generates a large quantity of digital media files in the form of videos and photographs that are difficult for farmers to consume in reasonable time intervals. In many cases, the image data is not detailed or granular enough for analysis, particularly where identification of specific plant species among other plants is involved. Furthermore, farmers often lack the ability to analyze and consume unstructured data from new farm technologies, such as, by non-limiting example, sensor data from internet-of-things (IoT) sensors, global positioning sensor (GPS) data, video data from fixed cameras, and the like. Various farm equipment manufacturers do not provide farmers with data in easy to digest/process formats, leaving the farmers to attempt to integrate multiple digital media types/forms to attempt to understand the overall state of their farmland in order to make planting/harvesting/treatment decisions.

The various system and method implementations disclosed in this document provide farmers (and other agricultural workers and consultants) the ability to virtually "walk" their fields/facilities using virtual reality and/or augmented reality headsets. The system and method implementations integrate a wide variety of data sources including, by non-limiting example, multiple camera feeds from a wide variety of camera types mounted on farm equipment, farm IoT sensors, UAV imagery, uncrewed ground vehicle (UGV) imagery, uncrewed water vehicles, and the like. The system and method implementations can provide farmers with the ability to dynamically review, tag and analyze their fields/facilities and, in various implementations to off-line/remotely trigger operations for their autonomous, semi-autonomous or human-driven machines to take next-best actions. The VR and/or AR environments allow bidirectional feedback and historical vegetation playback that can be critical for farm decision making by a farmer. Furthermore, where artificial intelligence in the form of a trained model(s) is used to further interpret/analyze the image and video data, the artificial intelligence may also be able to provide recommendations as to actions/changes to be taken in near or real-time that could result in reductions of crop losses, increase crop yield, and/or result in cost savings. Also, the various system and method implementations' ability to integrate disparate data sets from different data sources and equipment types using crosswalks, data fabric, and cloud computing resources can help resolve the challenges farmers face in attempting to use and integrate data sources from different systems.

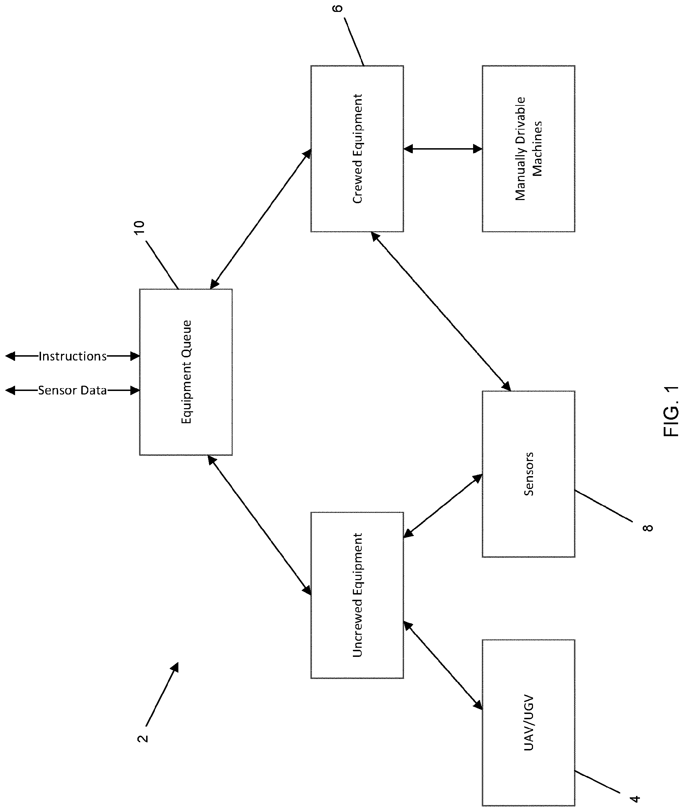

Referring to FIG. 1, a block diagram of the physical components that may be included in various system implementations 2 like those disclosed herein is illustrated. Here, the system includes various uncrewed equipment 4 such as, by non-limiting example, UAVs, UAGs, uncrewed water vehicles, autonomously driven tractors, autonomous harvesters, autonomous weeding/fertilizing systems, autonomous watering systems, and other autonomous or semiautonomous equipment that traverses fields, tanks, enclosures, greenhouses, and other growing/cultivating apparatuses. The system also includes various manually driven/controlled manned equipment 6, including, by non-limiting example, tractors, harvesters, spraying systems, manual watering systems, or any other manually directed equipment used to traverse fields, tanks, enclosures, greenhouses, and other growing apparatuses. As illustrated in FIG. 1, various sensor components 8 may be mounted on both uncrewed and crewed equipment and may include IoT sensors, wired sensors, wireless sensors and many other sensor types, including, by non-limiting example, visual sensors, cameras, ultraviolet sensors, infrared sensors, temperature sensors, humidity sensors, pressure sensors, vibration sensors, ambient light sensors, or any other sensor type designed to collect desired agricultural data from any facility type disclosed in this document.

As illustrated in FIG. 1, the various sensor data is conveyed to the uncrewed equipment or crewed equipment to which the sensors are either physically coupled to via a wired telecommunication channel or in wireless communication with via a wireless telecommunication channel. The sensor data is then provided to an equipment queue module 10 (queueing module) which is a computing device/system designed to receive and perform initial processing of the sensor data prior to sending to a cloud computing system. Such initial processing may involve, by non-limiting example, compressing, filtering, pre-analyzing, random sampling, implementing one or more data crosswalks, or any other desired initial data processing operation. In various implementations, the equipment queue module may perform some or all of the functions of a data ingestion module/recategorization module disclosed herewith.

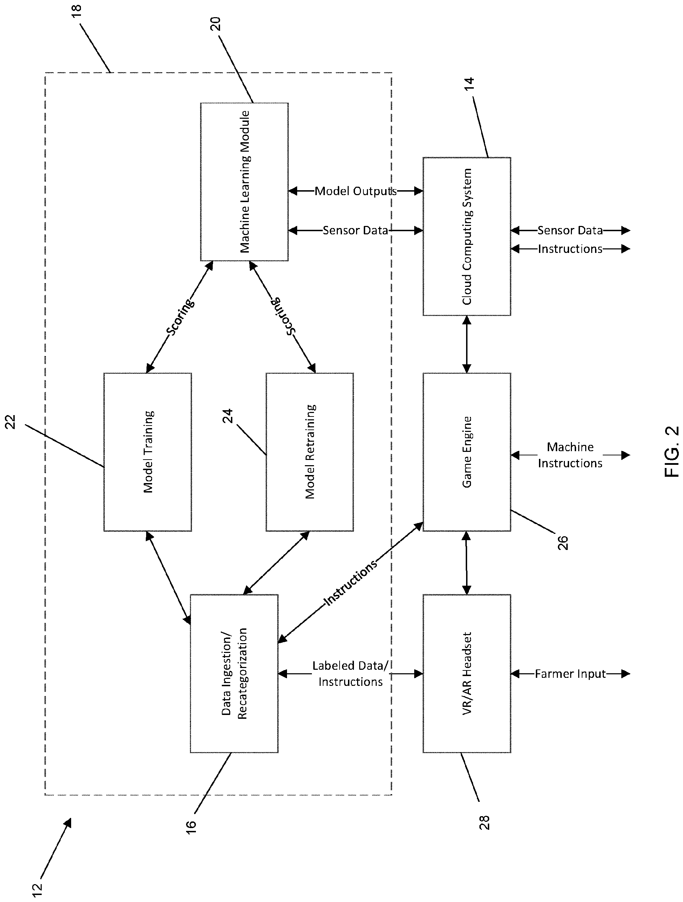

Referring to FIG. 2, a block diagram of an implementation of the control components of a system implementation 12 used to enable virtual walking of a field associated with a particular farmer is illustrated. Here cloud computing system 14 is illustrated while receiving sensor data from an implementation of an equipment queue module (queueing module). While in this implementation, the sensor data is being received from the equipment queue module, in other implementations, the sensor data may first be processed by data ingesting/recategorization module 16 instead, and then routed to the cloud computing system via a telecommunication channel.

In various implementations, the cloud computing system 14 includes one or more processors operably coupled to a memory which carry out computing operations of the system 12 for one or more of the modules disclosed in FIG. 2 in a distributed, scalable fashion depending on the resources needed. In some implementations, the cloud computing system 14 is a private cloud that limits access to the data stored in the cloud in a cloud database to just the farmer. In such implementations, the private cloud may include one or more servers, one or more databases, one or more desktop computers, one or more laptop computers, one or more portable computing devices, or any combination thereof. These computing resources are form a dedicated computing system that contains only the agricultural data associated with the system 12. While the computing system is dedicated, it may contain agricultural data from multiple farmers however.

In other implementations, some or all of the components of the cloud computing system 14 operate on a public cloud operated by a provider separate from the manufacturer of the system 12 and the farmer. Example of public cloud computing systems that could be utilized include those, by non-limiting example, marketed under the tradename AZURE by Microsoft Corporation of Redmond, Washington; GOOGLE CLOUD by Google Inc. of Mountain View, California; or AMAZON WEB SERVICES by Amazon Web Services, Inc. of Seattle, Washington.

As illustrated, the cloud computing system 14 is operably coupled with reinforcement learning module 18 components that are illustrated as enclosed in the dotted line box in FIG. 2. Here the reinforcement learning module 18 is illustrated as being separate from the cloud computing system for the purposes of illustrates. In various system implementations, the reinforcement learning module 18 utilizes machine readable instructions included in the memory of the cloud computing system and the one or more processors included therein to operate. In other system implementations, some or all of the machine readable instructions may be included in the memory of a dedicated computing resource that includes one or more processors that is operatively coupled with the cloud computing systems via one or more telecommunications channels. While the term "reinforcement learning module" is used here, this is only for the exemplary purposes of this disclosure as other model types other than reinforcement learning modules may be included and utilized for modeling the data provided by the various sensors. Thus the reinforcement learning module may include any of the various model types disclosed herein.

As illustrated, the cloud computing system 14 performs additional data processing operations to prepare the sensor data for consumption by the reinforcement learning module 18 and providing it to the various system components, for example, the machine learning module 20. Here, the data ingestion/recategorization module 16 performs additional data transformations and data crosswalking operations to format the data for use in machine learning operations and model training operations. Model training module 22 receives the processed data from the data ingestion/recategorization module 16 and/or the cloud computing system 14 and works to train the particular machine learning model(s) being employed which are included in the machine learning module 20. Example of models which may be employed in various system implementations may be, by non-limiting example, deep reinforcement learning models, neural networks, deep neural networks, convolutional neural networks, recurrent neural networks, hidden Markov models, any combination thereof, or any other deep learning or supervised learning machine learning model type. In various system and method implementations, a single model may be employed; in other implementations, multiple or ensembles of models may be utilized. Additional examples of models that may be utilized include, by non-limiting example, reinforcement learning-based neural networks, linear regression models, ensembles of deep learning models, or any combination thereof. In some implementations, different models may be employed for different sensor data types. For example, linear regression models could be used for weather data while a deep learning model could be employed for modeling weed recognition models.

As illustrated in FIG. 2, the output of the model training model 22 may be scored data provided to machine learning module to form/assist in training a model implemented by the machine learning module 20. As part of the model training process, model retraining module 24 may be employed to assist in the process of forming a deep reinforcement learning model or otherwise refining the model being developed iteratively by providing scored data. In various system implementations, the training of the model(s) may be carried out exclusively by the model training module 22 in combination with the model retaining module 24 and the resulting model is stored for implementation in the machine learning module 20. In other system implementations, the training of the model(s) may be carried out by the machine learning module 20 in concert with the model training module 22 and the model retaining module 24.

Referring to FIG. 2, the data ingestion/recategorization module 16 is employed to process some or all of the sensor data and also receives data and instructions from a virtual reality (VR) headset or augmented reality (AR) headset being worn by a farmer or a farmer-designated person (employee/worker) during a data review process described hereafter. As illustrated, the data/input from the VR/AR headset includes labeled data and/or instructions that the data ingestion/recategorization module then processes to format in such a way that it is ready for action by the machine learning module to generate model outputs to the cloud computing system. In various implementation, the instructions include a physical location on a farm associated with the farmer in the form of, by non-limiting example, global positioning system (GPS) coordinates, measurements, object references, pixel mapping locations, or any other system or data from a three dimensional data display environment that can be used to resolve a physical location. In various implementations, the instructions may also include a desired action to be performed at the physical location using equipment as will be disclosed hereafter.

In response to the model outputs from the machine learning module 20, the cloud computing system 14 can generate one or more instructions regarding the desired action and the physical location that are then sent to the equipment queue module (queuing module) 10 (see FIG. 1) which the equipment queue module then utilizes to queue one or more pieces of uncrewed or crewed equipment to carry out a certain task at a certain location in a field or other location of an agricultural space disclosed herein. In various implementations, the queueing module employs, in some implementations, GPS coordinates to identify the desired physical location on the farm or agricultural space. In this way, the farmer's inputs (or the farmer's designee's inputs) can be translated into actions to be taken by the equipment in response to the farmer's virtual "walk" of the field. In various method implementations where the equipment queuing module 10 issues instructions, these instructions may be issued to one or more pieces of uncrewed equipment which then, at the time appointed, travel to the physical location and perform the desired operation which may be, by non-limiting example, any of the equipment operations disclosed herein, including weeding, spraying, fertilizing, watering, cutting, harvesting, plowing, raking, cultivating, or any combination thereof. Following completion of the desired operation/action, the uncrewed equipment then send a confirmation to the queuing module that the desired operation/action has been completed using a telecommunication channel like any disclosed herein (wired or wireless).

In other method implementations, the instructions issued by the queuing module 10 are received by one or more workers who then, at the time appointed, drive/move the crewed equipment to the physical location (which may be any type of physical location disclosed herein, i.e., field, section, block, row, point, etc.) and carry out the desired action. When the desired action is completed and/or after returning the crewed equipment to a storage location, the one or more workers then send a confirmation to the queuing module 10 that the desired action has been completed. In such method implementations, the desired action may be any disclosed in this document.

In various implementations, the farmer's experience of the data may be aided by processing using a game engine module 26 designed to format the data coming from the cloud computing system 14 and machine learning module in a form that is "walkable" or viewable using the VR/AR headset 28. In various implementations, the data includes synthesized sensor data. Synthesized sensor data may include, by non-limiting example, combinations of modeled data and sensor data, exclusively modeled data, exclusively sensor data combined with image data, or any combination thereof. The game engine module 26 may also be designed to assist with translating the farmer's interactions in the virtual space into instructions that the data ingestion/recategorization module then uses as inputs to the machine learning module. Examples of game engine modules that may be employed in various implementations may include the system marketed under the tradename UNREAL ENGINE by Epic Games of Cary, North Carolina or the tradename UNITY by Unity Technologies of San Francisco, California. In this way, the farmer's "walk" of the field can also be accompanied with the farmer being able to provide, in real time, instructions that the system can translate into actions to be taken by the unmanned and/or manned equipment.

Various implementations may employ a wide variety of VR/AR headset types including, by non-limiting example, those marketed under the tradenames OCULUS/META QUEST/META QUEST 2/METAQUEST 3 marketed by Meta Platforms, Inc. of Menlo Park, California; or HOLOLENS 2 marketed by Microsoft Corporation of Redmond, Washington.

Implementations of the system may be employed in various methods that utilize the system to carry out various method implementations that allow farmers to detect/walk/provide instructions.

### Virtual/Augmentation "Walking"

In a method implementation, the method includes conducting a virtual farm walk using the VR or AR headset 28. Using the data fabric and cloud computing system 14 the game engine module 26 consumes historical data, image files, video files and any data point useful for the rapid development of insight within VR or AR session with a farmer. Telemetry data from the farm field or system of IoT devices, either in air or on ground, transmitted to the cloud computing system is also consumed by the game engine module 26 as it renders a graphical representation of the visual and telemetry date to the user through AR/VR headset 28. In various implementations, the AR/VR headset 28is used to deliver the data to the farmer either in a geographically dispersed manner or field/section by section of the farmland or agricultural operation.

In various method implementations, the display of data using the VR/AR headset 28 can be replayed, sped up, slowed down or brought closer to or farther away from the farmer (magnified/shrunk). In this way, the image data generated by the game engine module 26 can be consumed by the farmer at a rapid scale/pace. In various method implementations, the video and related data are used to expose the lifecycle of vegetation/crops on the farmland. The video and related data can also demonstrate/prove plant necrosis and morphology as the vegetation grows from seedling to sprout to adult plant. The ability to play and replay the collected datapoints from the various equipment and sensors provides the farmer with an experience that can emulate walking a physical field or other physical facility.

In various method implementations, digital overlays visible to the farmer via the VR/AR headset 28 can be created by the game engine module 26 using GPS coordinates of farmland blocks/fields that allow the farmer to observe the current active state and past state(s) of the vegetation at the same locations in a field. As the image data shows issues/patterns arising with the crops (necrosis, weed growth, growth of fruits, flowering, etc.), the farmer, using the VR/AR headset 28 and related components and the gaming engine module 26 may be able to digitally tag or mark points of interest in the field of view for review later while the GPS coordinates (or other locating measurements) of the points of interest are stored by the system. In various implementations, the farmer may be presented with a menu in the headset view that allows them to schedule specialized treatments for areas of concern within the crop where the areas of concern are noted as stored GPS coordinates (or other locating measurements) by the system. These instructions are then queued for execution by the equipment queue module 10 for sending to one or more uncrewed vehicles and/or crewed vehicles to be carried out during an already scheduled pass or in a pass scheduled for the purpose of addressing the issues noted. For example, if a tractor that sprays herbicide misses a group of weeds in a block of farmland, the farmer using VR/AR headset 28 could note the presence of the living weeds in the latest image data and then used the headset display to send an instruction and give special instructions to re-spray that quadrant of weeds while the system notes the location using the GPS data digitally overlaid over the video data from the last pass. In various method implementations, the digital overlays can be customized, saved, and further developed to slice ingested data into useful insights to a farmer such as, by non-limiting example, water density, soil density, soil type, soil condition, obstacle locations (rocks, etc.), pH balance, pH measurements, organic content, weed density, weed type, weed management planned, crop yield (present and/or historical), crop health (present and/or historical), solar density heat map, solar density analysis, field elevation/relief, row locations/locating, rainfall (present and/or historical), or any other desired data measurement for a location in a field or other growing apparatus associated with an agricultural operation disclosed herein.

The ability of the farmer to employ a VR/AR headset 28 to virtually walk the fields/agricultural spaces associated with a farm or other agricultural facility can provide the farmer the ability to traverse thousands of acres nearly instantaneously through use of image forwarding, rewinding, or jumping to location capabilities of the game engine module 26. In some implementations, the use of digital markers within the image data may aid the farmer in reaching a desired location. For example, using GPS data coordinates, previously known boundary lines, previously defined waypoints, and/or previously tagged points of interest, the farmer can quickly "teleport" to key areas of interest in a field for review. This ability of the game engine module 26 and the method implementations disclosed herein to accelerate the previous process which required driving farm equipment to the back 40 acres of land in order to visually physically check individual rows of crops to determine why vegetation is decomposing, for example, can represent a significant time savings and reduction of resource consumption with a corresponding reduction in greenhouse gas emissions. With data from vehicle mounted cameras, sensors and IoT devices integrated into the virtual farm, the farmer would be able to quickly teleport to the back 40 acres and digitally review camera footage from the last treatment/traversal. Similar principles could be used in methods of operation of traversing other physical facilities used in agricultural operations disclosed herein.

Additionally, in a fully system integrated farm, the farmer would also be able to delegate a task via the system using the equipment queue module (queueing module) 10 for scheduling a time for a crewed or uncrewed vehicle to be sent to the distant rows to, by non-limiting example, stream a live inspection of the vegetation, autonomously take soil samples, use models (machine learning, etc.) to analyze data from a current inspection for common problems to be sent back to the virtual command center.

The method and system implementations may also enable farmers to remotely collaborate with agronomists, farm workers, or other experts in the particular field of cultivation to jointly analyze data from the system employing the digital overlays to diagnose issues and ultimately create, by non-limiting example, treatment plans, harvesting schedules, planting schedules, crop rotation schedules, fertilizing strategies, or any other aids to advance growth of the plants/organisms being farmed. In various method implementations, by non-limiting example, an agronomist could be invited to virtually "walk" certain locations of a farm and view related helpful data in the digital overlay(s) without needing to drive to the farm. Multiple agronomists could inspect the same row or block as the farmer in real time (live) and they could, through this virtual "walk" meeting collaborate digitally in real-time from locations around the globe. For specialty crops where specialized expertise is limited to a few individuals, this can provide farmers who can provide this type of virtual access to their farm key advantages over competitors particularly where growing the crops requires special expertise and farms may not always be geographically co-located.

In various method and system implementations, a farmer who is physically in a field walking a crop may also have the option to leverage wearing an AR headset that is in wireless communication with a data source via wireless infrastructure on the farm to assist them with on-demand historical analysis of plant history. Current methods require farmers to keep detailed records or maintain domain knowledge of their crop history in a given field. However, with the use of an AR headset, the historical visual and related digital overlay data can be accessed on-demand for the farmer to view while in the field and while turning various directions to view the field/location. The use of the AR headset can also provide farmers with the ability to rapidly assess and analyze observed insect infestation and/or plant degradation due to disease/weeds. With historical imagery available, for example, last month's plant health could be compared in real-time to presently observed degrading crop health to detect the degree of infestation.

Similar to the previously described method implementations involving virtual "walking," tasks/actions can be created by the farmer for treatments of the areas being observed from the AR headset. These tasks/actions can similarly be queued by the equipment queue module for execution by an uncrewed or crewed vehicle. For example, if a farmer finds weeds that have been missed in a row while wearing the AR headset because of a spray solenoid failure, the farmer can note the locations and the system can a second pass for that sprayer can be scheduled to only address the missed treatment based upon GPS coordinates provided by the headset. The instruction could include the level of detail that only the spray area covered by the previously failed spray solenoid would need to be resprayed, thus saving chemical through reducing spraying.

In a particular system implementation, a game engine module like any disclosed herein is used to stitch together farm imagery, sensor data, and data from other internet-of-things devices to generate a virtual farm walkthrough. During the virtual farm walkthrough, the farmer could interact with the interface using any of the AR/VR device types disclosed in this document. The interface generated by the game engine provides both a digital representation of the aerial view of the farm using UAV captured images for the above ground views and also provides a "drill down approach" to allow the user to drop down to ground level and zoom to the level of individual plants in individual rows of an entire farm. In this implementation, the field rows within a block area of a field in the interface utilize a mixture of 3D video camera images and farm equipment captured images to create row by row virtual three dimensional representations of the plants in each row.

In this implementation, the user starts with an aerial viewpoint of their individual farmland plot that has blocks highlighted with different colors within the interface. At this level, the user is able to see heat-map like marked areas of concern/interest within or across blocks based on particular data values and/or created by analysis by an artificial intelligence based on data and/or image data from the blocks. This artificial intelligence may be a model like any disclosed herein. In the implementation pop-up menus with digitally rendered information taken from the back-end game engine database are also included when each block/hot spot is selected by the farmer. This pop-up menu interface shows the user a quick summary of critical information such as weed hotspots, operations errors, agricultural issues and more in each block/hot spot region. The farmer can, using the interface, select individual blocks to zoom to or utilize the menu to immediately be taken to a row number and plant location based upon GPS coordinate mapping between the interface as the image/sensor data collected.

This capability to reach exact physical locations in the virtual interface allows the user to "virtually walk" thousands of acres using an AR/VR device and move from location to location within those thousands of acres in real-time/near real-time. Using the interface, the farmer selects a section of crop land labeled "jump-to" within the interface that allows the farmer to then "teleport" or "digitally traverse" directly to an individual row of crop. If the farmer wants to view the row-level view, an acreage block is selected and the game engine will render the locality's 3D camera imagery for the rows in the field into an interface view. The interface permits the farmer to see an accurate representation of the plants/soil in the real-world farm field for that block and row. In various implementations, the ability to filter the visual data in the interface by crop number can also be accomplished via the interface. In the interface, each row is digitally numbered and can provide the user with information about the crop section such as, by non-limiting example, crop type, plant type, number of weeds, operations errors, last watering time, Ph balance, soil moisture content, and any other desired data value that can be collected using visual or sensor data. In various system and method implementations, the game engine receives synthesized data (data points, images, movies, etc.) from a cloud database through an extract, transform, and load (ETL) process that allows the game engine to render virtual representations of key datapoints into the interface.

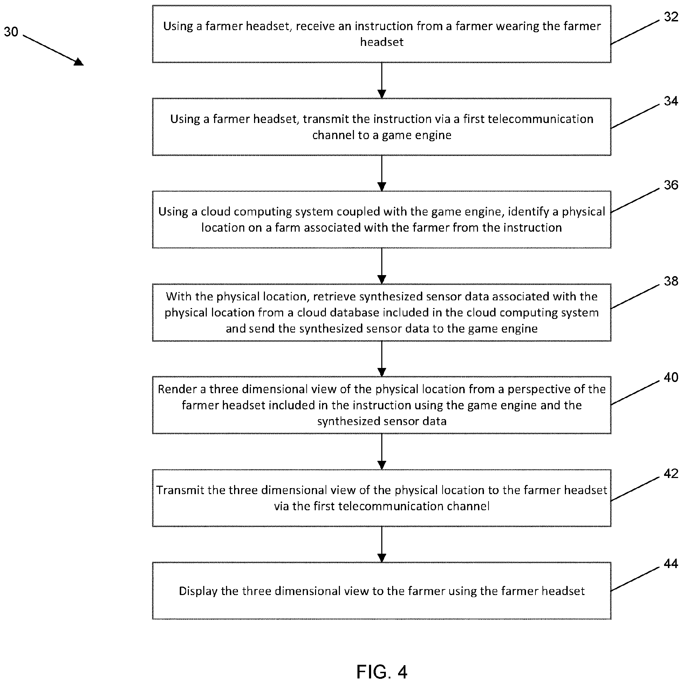

Referring to FIG. 4, an implementation 30 of a method of enabling a farmer to virtually walk a field is illustrated. As illustrated, the method includes using a farmer headset (AR/VR headset) to receive an instruction from a farmer wearing the headset (step 32). The headset may be any type disclosed in this document. The method also includes using the farmer headset to transmit the instruction via a first telecommunication channel to a game engine (step 34). The first telecommunication channel may be a wired or wireless telecommunication channel in various method implementations. The method also includes using a cloud computing system coupled with the game engine to identify a physical location on a farm associated with the farmer from the instruction (step 36). The method includes using the physical location, retrieving synthesized sensor data associated with the physical location from a cloud database included in the cloud computing system and sending the synthesized sensor data to the game engine (step 38). The method also includes rendering a three dimensional view of the physical location from a current perspective of the farmer headset including in the instruction using the game engine and the synthesized sensor data (step 40). This current perspective may be included in the instruction using coordinate/position detecting information that is provided by the farmer headset itself or from positioning equipment external to the farmer headset that tracks/monitors the position of the farmer headset in three dimensional space. The method also includes transmitting the three dimensional view of the physical location to the farmer headset via the first telecommunication channel (step 42). In some implementation, another telecommunication channel could be used here depending on whether the farmer headset is plugged into a computing device assisting with the data transport. The method also includes displaying the three dimensional view to the farmer using the farmer headset (step 44).

In various method implementations, the method may include where the instruction is generated through receiving a selection of the physical location from an interface displayed by the farmer headset to the farmer. In some implementations, this may take the form of a menu or highlighted location that the farmer activates. The method may also include a transition from an existing three dimensional view of a portion of a farm currently being viewed by the farmer to the three dimensional view of the physical location. The transition may visually appear like a jump, a stream of images moving from one place to the other, or another desired transition. As previously discussed, the various method implementations may include where the three dimensional view include a crop section (crop section display) that includes information associated with the crop section. In some implementations, the information may be, by non-limiting example, crop type, plant type, number of weeds, operations errors, last watering time, Ph balance, soil moisture content, or any combination thereof.

### Action Scheduling

Selected actions can be taken from the three dimensional interface displayed to the farmer using the farmer headset based upon the data summary provided about the crops and the farmer's decision on what next best action should be taken. The interactive menu displayed to the user in various implementations may, in certain implementations, have a selector for each crop row that allows the user to schedule actions that can be executed in the physical world. Actions can be, by non-limiting example, any described in the subsequent paragraphs that utilize the system to take an action or consult an expert.

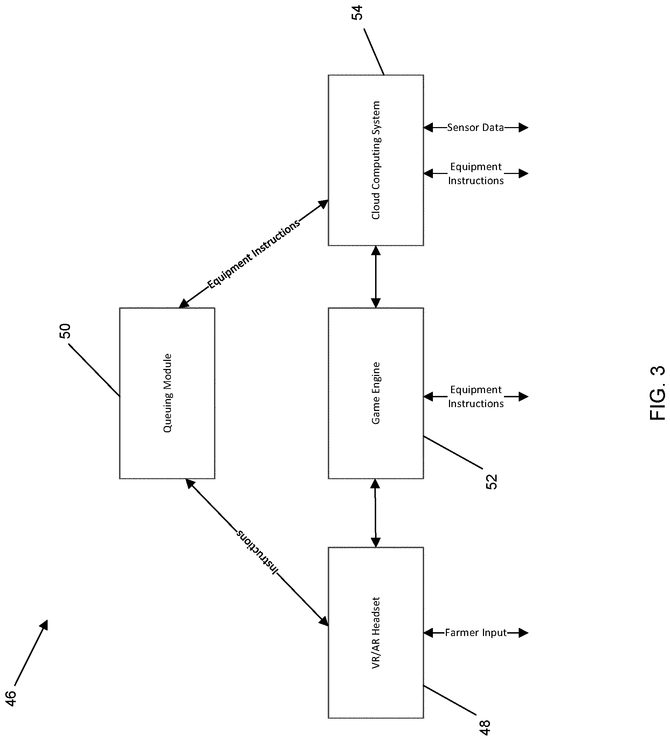

In various system implementations 46, referring to FIG. 3, the interface enables the farmer to schedule autonomous mowers and sprayers (or other autonomous machines) to deploy at convenient times, day or night. Referring to FIG. 3, while the farmer is virtually walking the digital farmland using the farmer headset 48 in combination with the game engine 52 and cloud computing system 54 as previously described, the farmer can schedule individual tasks by block, by row and by section (individual plant areas). The farmer also may be able to set waypoints for individual tasks as the farmer reviews and decides on the next best actions. Each waypoint is stored in the database along with its farm metadata and approved action list. The cloud system sends instructions to a queueing module 50 (for example, by non-limiting example, any the systems marketed under the tradenames KINESIS by Amazon Web Services, Inc. of Seattle, Washinton; APACHE KAFKA by the Apache Software Foundation of Forest Hill, Maryland; RABBITMQ by VMware, Inc. of Palo Alto, California) to be consumed by the field systems requiring those instructions. Depending on the state selected by the farmer in the user menu (for example, immediate deployment or future date/time deployment), the receiving robotic system will execute the tasks identified using the ATL data fabric. In various system implementations, the robotic receiving system continuously searches for push notifications from the queuing module 50 and determines based upon battery storage banks and on-board system controls if the task needs to be executed immediately or scheduled for a later date once charging is completed. Upon deployment, the robotic system can then read any waypoint instructions provided and also utilize on-board navigation and baseline maps to autonomously drive itself to the required area to execute the instructed task.

In various system and method implementations, the interface permits the farmer to send data captured to live agriculture experts for review. As the farmer is reviewing anomalies and alerts within the interface, the interface may include the option to transmit data to agricultural experts for review. In various implementations, via the interface, the farmer can mark points of interest in a field or fields for review by agriculture experts which, in response to the marking of the point(s) sends notifications through the queuing system that enables push notifications to a service support system accessed by the agriculture experts. The agriculture expert can then put on an AR/VR headset like any disclosed herein and, via the service support system, instantly be taken to the user's area of concern on the farm as the game engine allows access to and creates the interface for the agricultural expert. Data collected can also, in various system/method implementations, be collaboratively reviewed in real-time or near real-time by the farmer and the agricultural expert in virtual reality. The ability of the game engine to create interfaces that permit live collaboration allows for the "virtual farm walking" to be participated in by geographically dispersed agricultural experts to review any farm around the globe. In various system implementations, data that is transmitted by the game engine to the agricultural expert is authenticated to the agricultural expert by a smart-contract, proof of work design to both secure the data and show that the represented data in the virtual environment is in fact owned by the farmer seeking the review. This authentication process protects both farmer and agricultural expert from collaborating with otherwise unknown users on both ends. It also ensures that both farmer and agricultural expert have the confirmed authority to transact in virtual reality. Without confirmation of both sides of the smart-contract, a farmer and/or agricultural expert is not allowed to view the data in the system or access the interface. In various implementations, the creation of Non-Fungible Tokens (NFTs) are used to transact digitally where the images, data samples, video, GPS coordinates and metadata are all embedded into the NFT.

In implementations where NFTs are employed, in addition to consulting with agricultural experts, the farmer can receive and share local insights to, by non-limiting example, neighboring farmers, commercial entities, or other interested parties for research. For example, the farmer has the ability to share their NFTs with neighboring farmers, commercial entities, or other interested parties if insights are found by the system or determined by the farmer to be helpful to the neighboring farmer in, by non-limiting example, managing a farm or similar/same crop, the sharing of crop yield status, crop harvesting timing or any other reason that would benefit the neighboring farmer or farmer sharing the information.

At any time while using the interface, the farmer is able to print reports and data summaries for segments of the farmland metadata down to every data point captured that is available, including images. When reports, data summaries and images are printed, the corresponding NFT can either be made available in a digital wallet or downloadable in various formats for use in authenticating the printed data/reports. In various implementations, these reports can also be prepared and sent to governmental entities and agencies with pre-signed authorizations to convey information on the chemical usage on the farm or to provide data useful for the entity/agency on the farm's operation.

In various implementations, the farmer has the ability in the main menu to select whether or not a failing part on manual or automated equipment such as, by non-limiting example, a solenoid, nozzle, or other operational control requires replacing based upon observation of field data via the interface. In some implementations, the menu relating to operational maintenance in the interface is displayed as a marketplace. In such implementations, an artificial intelligence model like any disclosed herein may recommend what replacement should be purchased by displaying the most likely matching component for replacement. For example, if the farmer detects during a virtual walkthrough that an entire row of weeds was not sprayed and are thus still alive, this may be due to a broken nozzle or solenoid. In such implementation, leveraging AI-based anomaly detection and known error codes from the sprayer, an artificial intelligence sorts through the marketplace to display needed components that the user can select to purchase in using the interface. In various implementations, the selection is then recorded in the equipment queuing module to be sent to the inventory database as a purchase transaction for replacement parts. The purchase order is received and shipped by the associated supplier who is handling that item in the marketplace.

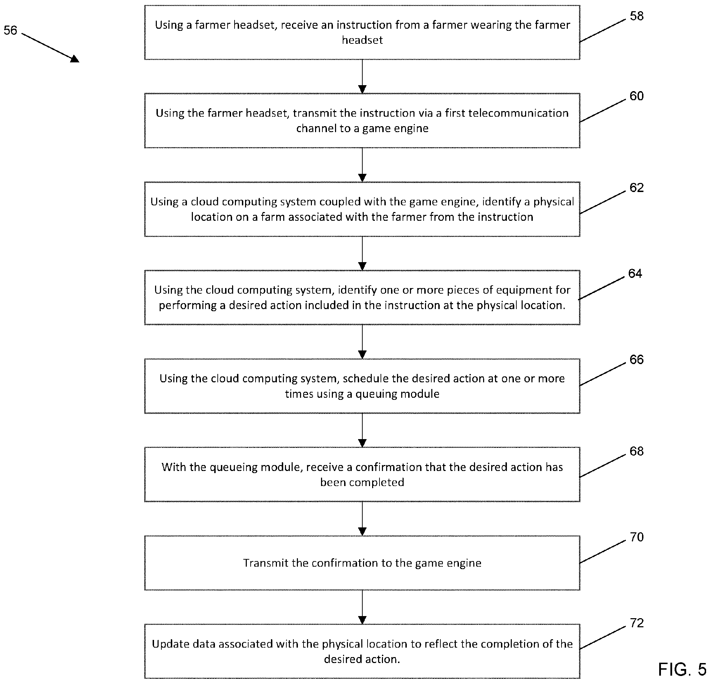

Referring to FIG. 5, a flow diagram of an implementation of a method for enabling a farmer to schedule a desired action 56 is illustrated. As illustrated, the method includes using a farmer headset to receive an instruction from a farmer wearing the farmer headset (step 58) and transmitting the instruction via first telecommunication channel to a game engine (step 60). The method includes using a cloud computing system coupled with the game engine to identify a physical location on a farm associated with the farmer from the instruction (step 62). The method includes using the cloud computing system to identify one or more pieces of equipment for performing a desired action included in the instruction at the physical location (step 64). The method also includes using the cloud computing system to schedule the desired action at one or more times using a queuing module (step 66). The method also includes using the queuing module to receive a confirmation that the desired action has been completed (step 68) and transmitting the confirmation to the game engine (step 70). The method also includes updating data associated with the physical location to reflect the completion of the desired action (step 72).

In various method implementations, the method may include issuing the instruction to one or more pieces of uncrewed equipment and receiving the confirmation from one or more pieces of uncrewed equipment that the desired action has been completed. In various method implementations, the method includes issuing the instruction to one or more workers and receiving the confirmation from the one or more workers that the desired action has been completed. In various method implementations, the desired action may be watering, spraying, photographing, weeding, fertilizing, plowing, raking, cultivating, cutting, harvesting, or any combination thereof.

### Re-training/Training of Images

In various method implementations, referring to FIGS. 1 and 2, tagged images and descriptors from both AR walks and VR walks are stored into the cloud computing system 14 or equipment queue module 10 to be used for machine learning training/retraining. In this way, the end user (a farmer or agronomist) can influence the baseline training of the model(s) included in the machine learning module 20 so that it is customized for their crop. Plant growth can vary widely from location to location and can sometimes be difficult for machine learning to characterize and classify accurately. If an end user identifies mislabeled plants, they can then re-classify them manually and the re-classification will be stored in the cloud computing system 14/equipment queue module 10 for use by the model retraining module 24. This use of re-classification data can be used in various method implementations to implement reinforcement learning to iteratively train AI models to improve the model(s) used by the machine learning module 20 so that better identification of a given crop/weed at different stages of growth can be carried out by the system 12.

The feedback loop created by user interaction can provide key information to the artificial intelligence training lifecycle. In many situations, poor lighting, dust particles and/or imperfect plant morphology may cause confusion for supervised (and even unsupervised) machine learning models that need human classification to identify and determine proper plant characteristics. With the VR/AR headset 28 readily available in a farmer's hands, the ability to properly baseline and re-classify irregularities in machine classification and identification can be a key step in continuously tuning machine learning models for farmland and other types of cultivation locations.

A visual-based feedback loop can also allow for new categories to be created in real time for plant diseases, new insect types, and the identification of other previously unseen problems in the field. This ability to augment the system can allow agronomists/farmers to independently train the models employed to be customized to the region, pests, weeds, and climate of the existing conditions.

In various method implementations, Large Language Models (LLMs) may make it feasible to rapidly to enhance the ability of image classification for broadly diverse image sets as well as enabling real-time natural language communication between the farmer and the system. The integration of LLMs into various method implementations can also expedite the user's ability to use voice recognition to execute commands using audio only in both the VR and AR use cases.

### Metaverse Integrations

With the image data collected for the various farmed locations on a farm, a farmer could employ non fungible tokens (NFTs) to tokenize each image/set of GPS locations on a field. This process could be enabled by using various metaverse sites that allow for the creation of virtual worlds where users have the ability to purchase and own real estate in the metaverse and rent access to it to other users. In this way, farmers could digitize their image data for their fields outside of the existing real estate market. For example, companies that develop seeds, fertilizers, weed/insect treatments, etc. could pay to be able to obtain the latest live or historical progression data of a field planted with their seeds, fertilized with their fertilizer, or treated with a particular weed/insect treatment. With the development of VR/AR applications, metaverse plugins can be used in various method implementations that permit farmers to create NFTs of their cropland images and sell access to these digital assets using a cryptocurrency marketplace or otherwise establish digital land and control access to the same. For example, the metaverse site marketed under the tradename DECENTRALAND by Decentraland Foundation could be employed to manage and provide access to the digital images. In various system and method implementations, the NFTs can give the farmer the option to make additional revenue stream through the monetization of their own farm data for university research or commercial use cases. Since the NFT is digital property owned by the farmer, the farmer has the option to now sell their data to interested parties.

In various system and method implementations, the ability to virtually map a farm may permit the ability to accurately establish fractional ownership of the corresponding physical farm. With the ability to use NFTs and blockchain to handle such transactions, the ability to collect a fractional share of revenues from the farm may be enabled.

In a particular aspect, a method of enabling a farmer to monetize agricultural data includes providing a blockchain and, using one or more processors and a memory, receiving image data from one or more sensors coupled to crewed equipment or uncrewed equipment traversing a farm associated with a farmer. The method also includes creating one or more non-fungible tokens associated with the image data and metadata using the blockchain and the one or more processors and the memory. The method also includes sharing the one or more non-fungible tokens with a neighboring farmer, a commercial entity, or an interested party for a fee using a telecommunication channel.

The method can also include where the non-fungible tokens include image data, a data sample, video, global positioning system coordinates, and metadata.

The method can also include using the one or more non-fungible tokens to validate printed reports or data summaries of metadata associated with the farm.

The method can also include using the one or more non-fungible tokens and the blockchain to create a smart contact between the farmer and an agricultural expert.

### Vehicle Control using VR/AR Headsets

The use and integration of VR/AR headsets into a given farm may also provide avenues for remotely controlled vehicle safety and maintenance being provided to the farmer by third parties in various method implementations. In various method implementations the ability to provide instructions to the equipment queue module allows for the farmer or other authorized third parties like field service engineers or maintenance professions to securely login and troubleshoot unmanned vehicles to investigate technical systems that have alerted for issues. In this way, utilizing the same method and system components that the farmer uses to manage their fleet of unmanned vehicles, an admin panel could be created in a metaverse environment to allow third parties to efficiently review current vehicle imagery and diagnose troubled systems. In this way, the farmers could save money for software patches and issues because a technician does not need to physically drive to farms to perform software upgrades but instead the upgrades could be pushed and installation supervised remotely thus saving expenses to farmers for maintenance. In various method implementations, safety features could also be enabled where services are provided to have virtual farmhands (contract or directly employed) driving farm equipment remotely using VR displays. These virtual farmhand displays could also be made available to the farmers themselves if they choose to drive their tractor from the comfort of an air conditioned house.

### Logistic Lineage:

Because the image data collection, aggregation, and display process used by the game engine to develop the interface results in mapping of plant data to specific GPS coordinate/physical locations, the mapping of products/crops from those plants can be accomplished. With this, those products/crops can be traced back to the physical location in the field where they originated at various points (or any point) in the subsequent supply chain location taking them to a location for direct consumption by a consumer or by a customer who will process the product/crops. In this way, the logistic lineage of where a product/crop has come from can be traced back to the source location in a field. This may be useful in the process of trying to analyze sources of disease outbreaks involving a product/crop, determining a source of a superior product/crop, or determining a location of a pest associated with a particular product/crop. A wide variety of possibilities where logistic lineage tracing is available through the data processing methods and systems disclosed herein are present.

In places where the description above refers to particular implementations of systems and methods for visualizing and interacting with agricultural data and implementing components, sub-components, methods and sub-methods, it should be readily apparent that a number of modifications may be made without departing from the spirit thereof and that these implementations, implementing components, sub-components, methods and sub-methods may be applied to other systems and methods for visualizing and interacting with agricultural data.

## Claims

1. A system for processing agricultural data, the system comprising:
a farmer headset operatively coupled via a first telecommunication channel to a game engine;
one or more processors and a memory comprised in a cloud computing system operatively coupled with the game engine; and
a reinforcement learning module operatively coupled with the one or more processors and the memory and with the farmer headset via the first telecommunication channel;
wherein the reinforcement learning module is configured to receive instructions using the first telecommunication channel from the farmer headset from a farmer wearing the farmer headset; and
wherein the reinforcement learning module is configured to, using the one or more processors and the memory and a second telecommunication channel, receive data from one or more sensors coupled to one of crewed equipment or uncrewed equipment traversing a farm associated with the farmer.

2. The system of claim 1, wherein the farmer headset is one of a virtual reality headset or an augmented reality headset.

3. The system of claim 1 or claim 2, wherein the one or more sensors are one of visual sensors, cameras, ultraviolet sensors, infrared sensors, temperature sensors, humidity sensors, pressure sensors, vibration sensors, ambient light sensors, or any combination thereof.

4. The system of any preceding claim, wherein at least one of the following applies:
(i) the crewed equipment is tractors, harvesters, spraying systems, or manual watering systems; and
(ii) the uncrewed equipment is autonomous equipment or semiautonomous equipment, and wherein optionally the uncrewed equipment includes uncrewed aerial vehicles, uncrewed ground vehicles, uncrewed water vehicles, autonomously driven tractors, autonomous harvesters, autonomous weeding systems, autonomous fertilizing systems, or autonomous watering systems.

5. The system of any preceding claim, wherein the reinforcement learning module comprises:
a machine learning module operatively coupled with the one or more processors and the memory;
a data ingestion/recategorization module operatively coupled with the game engine, the farmer headset and with the one or more processors and the memory;
a model training module coupled with the machine learning module and with the data ingestion/recategorization module; and
a model retraining module coupled with the machine learning module and with the data ingestion/recategorization module.

6. The system of claim 5, wherein the data ingestion/recategorization module is configured to receive processed sensor data from the cloud computing system and to format the processed sensor data for use in machine learning.

7. The system of claim 6, wherein the model training module receives processed sensor data from the data ingestion/recategorization module and trains a model comprised in the machine learning module.

8. The system of claim 7, wherein the model retraining module receives processed sensor data from the data ingestion/recategorization module and retrains the model comprised in the machine learning module, and wherein optionally the model comprised in the machine learning module is a deep reinforcement learning model and outputs from the model are transmitted to the one or more processors of the cloud computing system for transmission to the game engine.

9. The system of any preceding claim, wherein the game engine is configured to receive instructions from the farmer headset and enable the farmer to virtually walk a portion of the farm associated with the farmer that was traversed by the one of the crewed equipment or the uncrewed equipment.

10. A method for enabling a farmer to virtually walk a farm, the method comprising:
using a farmer headset, receiving an instruction from a farmer wearing the farmer headset;
using the farmer headset, transmitting the instruction via a first telecommunication channel to a game engine;
using one or more processors and a memory comprised in a cloud computing system operatively coupled with the game engine, identifying a physical location on a farm associated with the farmer from the instruction;
with the physical location, retrieving synthesized sensor data associated with the physical location from a cloud database comprised in the cloud computing system and sending the synthesized sensor data to the game engine;
rendering a three dimensional view of the physical location from a perspective of the farmer headset comprised in the instruction using the game engine and the synthesized sensor data;
transmitting the three dimensional view of the physical location to the farmer headset via the first telecommunication channel; and
displaying the three dimensional view to the farmer using the farmer headset.

11. The method of claim 10, wherein at least one of the following applies:
(i) receiving an instruction from the farmer further comprises receiving a selection of the physical location from an interface displayed by the farmer headset;
(ii) the three dimensional view includes a transition from an existing three dimensional view to the three dimensional view of the physical location; and
(iii) the three dimensional view includes a crop section that includes information associated with the crop section, the information comprising one of crop type, plant type, number of weeds, operations errors, last watering time, Ph balance, soil moisture content, or any combination thereof.

12. A method for enabling a farmer to schedule a desired action, the method comprising:
using a farmer headset, receiving an instruction from a farmer wearing the farmer headset;
using the farmer headset, transmitting the instruction via a first telecommunication channel to a game engine;
using one or more processors and a memory comprised in a cloud computing system operatively coupled with the game engine, identifying a physical location on a farm associated with the farmer from the instruction;
using one or more processors and the memory comprised in the cloud computing system operatively coupled with the game engine, identifying one or more pieces of equipment for performing a desired action included in the instruction at the physical location;
using the one or more processors and the memory comprised in the cloud computing system, scheduling the desired action at one or more times using a queuing module;
with the queuing module, issuing an instruction to perform the desired action;
with the queuing module, receiving a confirmation that the desired action has been completed;
transmitting the confirmation to the game engine; and
updating data associated with the physical location to reflect the completion of the desired action.

13. The method of claim 12, wherein at least one of the following applies:
(i) issuing the instruction to perform the desired action further comprises issuing the instruction to one or more pieces of uncrewed equipment and wherein receiving the confirmation further comprises receiving the confirmation from the one or more pieces of uncrewed equipment that the desired action has been completed;
(ii) issuing the instruction to perform the desired action further comprises issuing the instruction to one or more workers and wherein receiving the confirmation further comprises receiving the confirmation from the one or more workers that the desired action has been completed; and
(iii) the desired action is one of watering, spraying, photographing, weeding, fertilizing, plowing, raking, cultivating, cutting, harvesting, or any combination thereof.

14. A method for enabling a farmer to monetize agricultural data, the method comprising:
providing a blockchain;
using one or more processors and a memory, receiving image data and metadata from one or more sensors coupled to one of crewed equipment or uncrewed equipment traversing a farm associated with a farmer;
creating one or more non-fungible tokens associated with the image data and metadata using the blockchain and one or more processors and the memory; and
sharing the one or more non-fungible tokens with one of a neighboring farmer, a commercial entity, or an interested party for a fee using a telecommunication channel.

15. The method of claim 14, wherein at least one of the following applies:
(i) the non-fungible tokens comprise image data, a data sample, video, global positioning system coordinates, and metadata;
(ii) the method further comprises using the one or more non-fungible tokens to validate one of printed reports or data summaries of metadata associated with the farm; and
(iii) the method further comprises using the one or more non-fungible tokens and the blockchain to create a smart contract between the farmer and an agricultural expert.
